# EUROPEAN PATENT SPECIFICATION

(11) **EP 0 764 744 B1**
(45) Date of publication and mention of the grant of the patent: **24.02.1999**
(21) Application number: 96119551.8
(22) Date of filing: 14.09.1995
(51) Int. Cl.: E03D 1/36

(54) **An inlet valve mechanism**
Einlassventilmechanismus
Mécanisme de soupape d'alimentation

(30) Priority: 29.09.1994 AU PM0084/94
(43) Date of publication of application: 26.03.1997
(62) Divisional of application: 95114481.5
(73) Proprietor: CAROMA INDUSTRIES LIMITED, Brisbane, Queensland 4000 (AU)
(72) Inventor: Wright, Sonny Rene, Coburg, Victoria, 3058 (AU); Dunstan, Peter Ross, Verdun, South Australia, 5245 (AU); Streeter, Luke Daniel, Goolwa, South Australia, 5214 (AU)
(74) Representative: Patentanwälte Leinweber & Zimmermann

(56) References cited:
- EP-A- 0 182 663
- BE-A- 854 840
- DE-C- 364 423
- US-A- 4 843 657
- US-A- 5 211 204

## Description

The present invention relates to interlock mechanisms for cisterns and, in particular, to cisterns having a flush valve.

Cisterns (or flush tanks as they are known in the USA) can be conveniently categorised into two types. One type of cistern has a flush valve located in its base which is used to block the flush pipe which connects the cistern to the pan. The flush valve is analogous to the plug in a sink or basin which is full of water. When the flush valve is operated, this is equivalent to the plug being removed, and the water in the cistern flows through the flush valve and down the flush pipe. Cisterns of this type are for example disclosed in US-A- 5211204, EP-A- 0182663 and DE-C- 364423.

The other type of cistern is the syphonic cistern in which the flush pipe is connected with the interior of the cistern via an inverted U-shaped passage which at its highest point passes above the maximum water level in the cistern. In order for such a cistern to be flushed it is necessary for the U-shaped passage to be filled with water and thereby induce a syphonic action within the passage which syphons the water from the cistern into the flush pipe.

The cistern incorporating the flush valve suffers from the problem that the flush valve, particularly after a number of years of service, may commence leaking. Such leaking can be brought about because of a number of reasons such as algae growth on the valve, debris which has been introduced into the cistern via the inlet pipe becoming lodged in the flush valve, the perishing of rubber components of the flush valve, and the like. Normally such leaking is not catastrophic, instead there is a trickle of water down the flush pipe and into the lavatory pan.

All cisterns must be provided with a re-filling mechanism which normally takes the form of an inlet valve connected a mains water supply in which the water is under pressure, and a level detecting arrangement which opens the inlet valve when the water level within the cistern drops, and closes the inlet valve when the water level within the cistern rises to its predetermined "full" height or level. The level detecting arrangement is almost universally a float which is connected to the inlet valve by means of a pivoting float arm.

Because of the inlet valve and its float, as water trickles from a cistern with a leaking flush valve, the float drops slightly within the cistern thereby allowing a volume of water to enter the cistern and the level of water within the cistern to be brought back to the full level. This intermittent repetitive operation of the inlet valve keeps the cistern full of water and ready to be flushed on the next occasion when it is required to be used. As a consequence, although the leaking trickle of water into the pan may well be obvious to the persons using the cistern, such a trickle is universally ignored. Even the most vigilant of users is likely to regard such a trickle as merely a precursor which indicates that in many months time some maintenance action may be required in relation to the cistern.

It is well known that cisterns with leaking flush valves waste considerable amounts of water and that in this connection a cistern having a flush valve is very different from the syphonic cistern which is inherently non-leaking. This is because once the flush finishes and the syphonic action is broken, the interconnection between the water in the cistern and the flush pipe includes a passage which lies above the level of water in the cistern and thus no leak is possible. Instead, a deliberate measure must be taken in order to re-commence the syphonic action.

Because of the possibility of cisterns with flush valves wasting large volumes of water, in many jurisdictions cisterns with flush valves are prohibited by law or regulation. Hong Kong is one such jurisdiction where this regulatory regime arises because of historical problems regarding the uncertainty of water supplies.

However, in recent years many advances have been made in relation to flush valve cisterns, particularly in relation to dual flush cisterns which utilise very small volumes of water for a full and half flush (typically 6 and 3 litres respectively). Such dual flush cisterns have found favour with water supply authorities since they enable the volume of water consumed to be substantially reduced. Any saving in water usage is quickly reflected in an ability to defer capital works regarding the construction of additional reservoirs, dams and the like.

In view of the above identified problems of flush valve systems US-A-5 211 204 and EP-A-0 182 663 propose mechanisms which are capable of reducing the maximum value of water which can be waisted if the flush valve should happen to leak to the volume of water contained within the system. The flush valve system according to US-A- 5 211 204 comprises an interlock mechanism according to the features of the preamble of claim 1.

It is the object of the present invention to provide further improved flush valve operated systems of the type disclosed in US-A-5 211 204 and a further improved method of operating the same. With this respect an interlock mechanism for a flush valve operated cistern as specified in appended claim 1 and a method of operating a flush valve operated cistern as specified in appended claim 3 are proposed.

A basic embodiment of the present invention will now be described with reference to the drawings in which:
Fig. 1 is a side elevational view of the interior of a flush valve operated cistern utilising the basic embodiment,
Fig. 2 is a close up side elevational view of the top of the flush mechanism in the latch set position,
Fig. 3 is a view similar to Fig. 2 but showing release of the latch, and
Fig. 4 is a view similar to Figs. 2 and 3 but showing re-setting of the latch.

The basic embodiment of the present invention will now be described. Here the cistern 1 has a flush valve 3, and inlet stem 4, flush actuator buttons 10 and flush mechanism 11 substantially as before. However, mounted atop the inlet stem 4 is a conventional inlet valve 50 having a conventional float arm 57 and float 56.

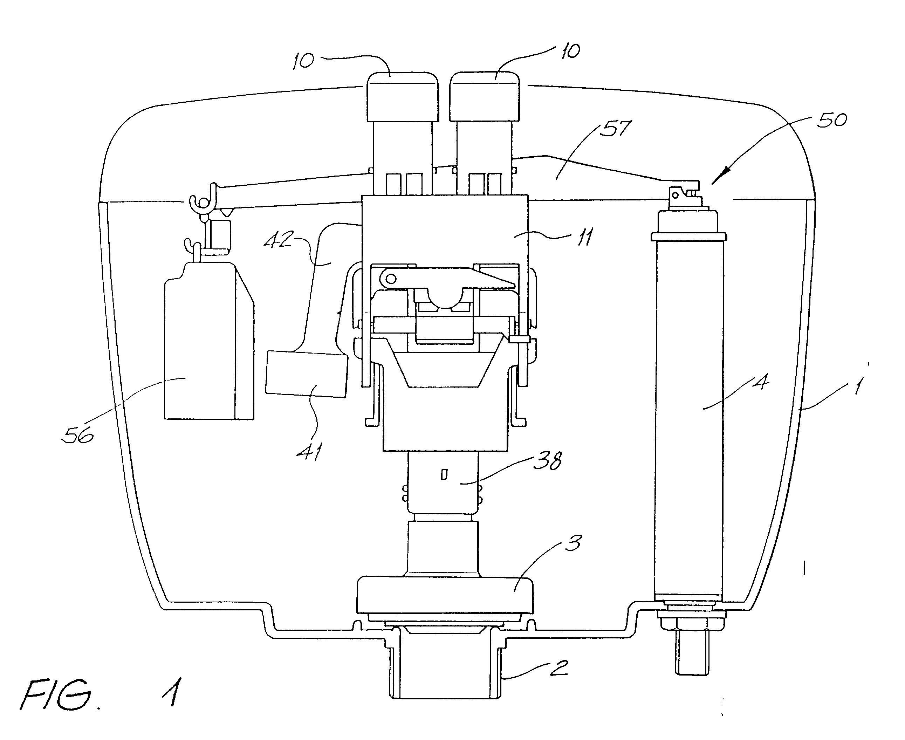

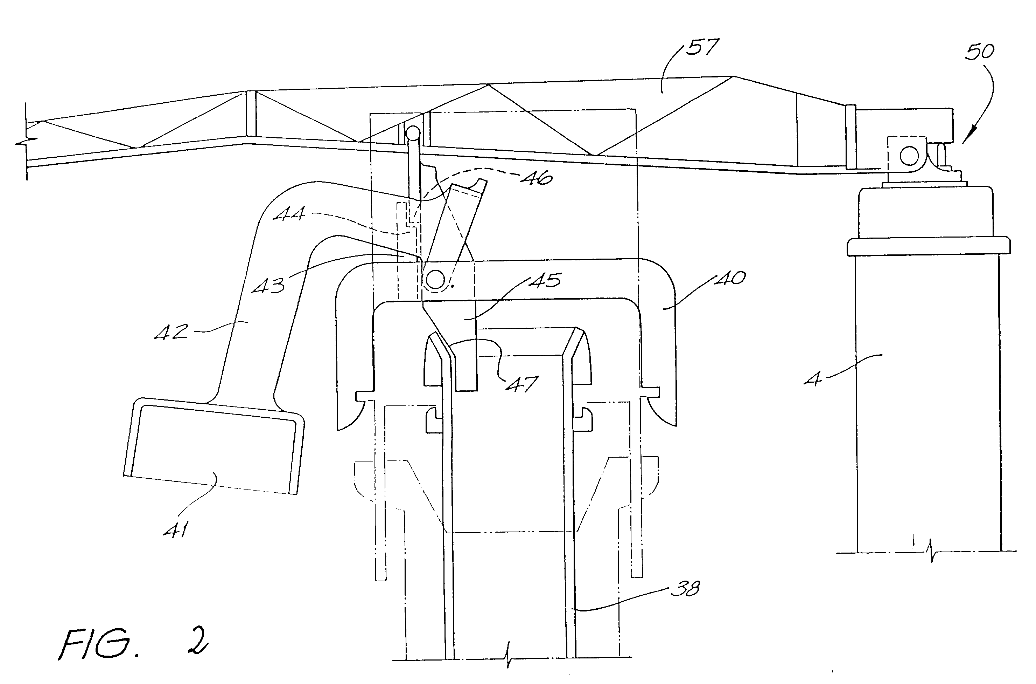

The flush valve 3 is provided with a hollow rectangular float stem 38, the lower portion of which is illustrated in Fig. 1 and the upper portion of which is illustrated in Fig. 2. The hollow float stem 38 functions as an overflow tube in conventional manner. Straddling the flush mechanism 11 and passing over the top of the float stem 38 is a saddle 40 on which is pivoted a downwardly directed cup 41. The cup 41 is pivoted on the saddle 40 by means of an L-shaped arm 42. Secured to the saddle 40 is an erect upstand 43 which includes a lip 44 which provides a flat surface or step. Pivoted from the float arm 57 is a pendulous stay 45 which includes a notch 46 towards its middle and a ramp 47 at its lower end.

In the initial position illustrated in Fig. 2 in which the cistern is full, the stay 45 is substantially vertical and the notch 46 is engaged with the lip 44. As a consequence, the float arm 57 is immobilised and unable to drop should the water level within the cistern fall.

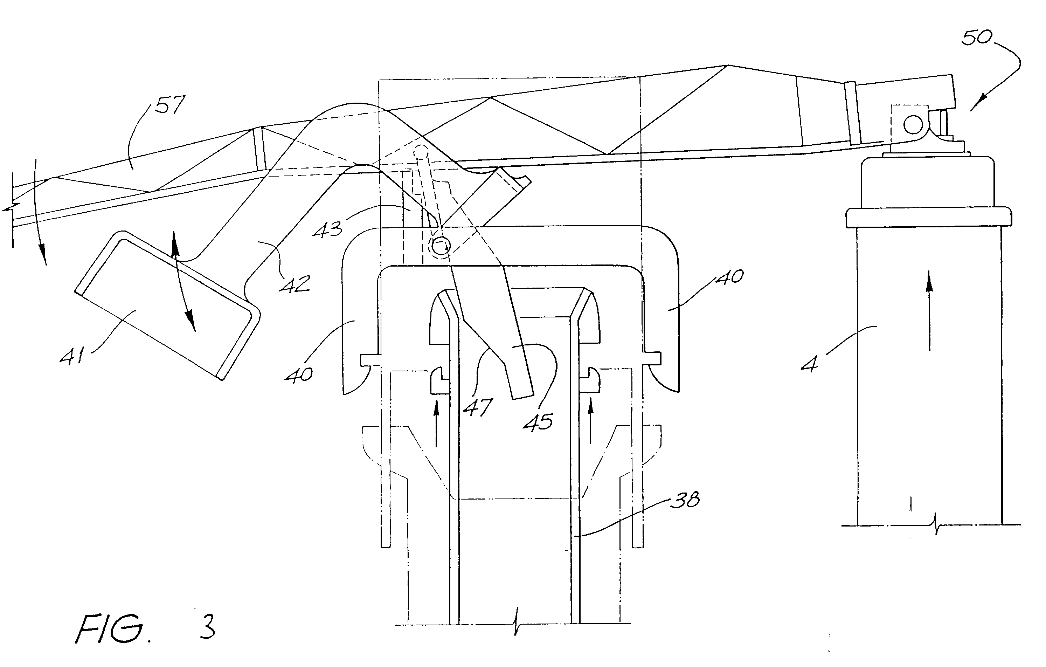

As indicated in Fig. 3, in the event that one of the actuator buttons 10 (Fig. 1) is depressed, then the conventional flush mechanism 11 raises the float stem 38 in order to open the flush valve 3. The upward movement of the float stem 38 moves the upper lip of the float stem 38 along the ramp 47 thereby tilting the stay 45 in an anti-clockwise direction to the position shown in Fig. 2. This disengages the notch 46 and lip 44 thereby allows the float arm 57 to pivot in an anti-clockwise direction as seen in Fig. 3. This allows the inlet valve 50 to permit water to enter the cistern 1 in order to refill the cistern. The fall and subsequent rise of water within the cistern 1 means that the downwardly directed cup 41 which functions as a float permits the L-shaped arm 42 to firstly pivot in a clockwise direction as the water level falls. and then pivot in an anti-clockwise direction as the water level rises. Since the stay 45 and lip 44 of the upstand 43 are disengaged during this period, the movement of the L-shaped arm 42 is of no effect.

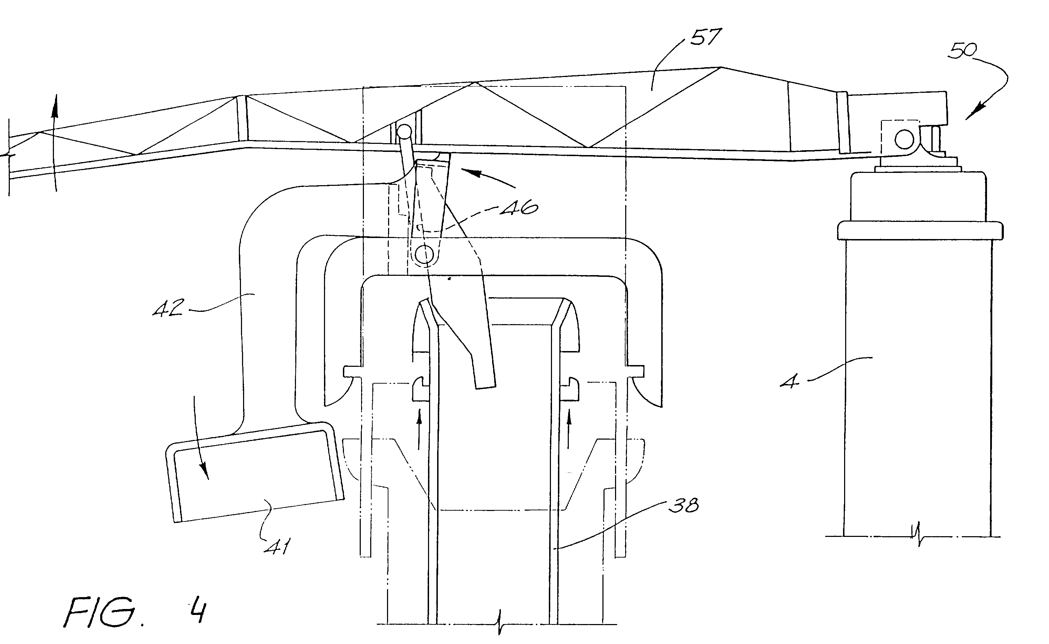

From the position illustrated in Fig. 2, if the flush valve 3 should happen to leak slowly, then the cup 41 falls slowly with the falling water level until it reaches essentially the position illustrated in Fig. 4. In this position, the pivoted end of the L-shaped arm 42 lies against the stay 45. As the stay 45 is in the position illustrated in Fig. 2, the arm 42 urges the notch 46 into firmer engagement with the lip 44. As a consequence, notwithstanding the fall in the level of water within the cistern 1, the float arm 57 does not fall and the water is allowed to enter the cistern 1. This position is stable and remains so until the next occasion on which either one of the flush actuator buttons 10 is depressed thereby raising the float stem 38.

When the float stem 38 is raised, the stay 45 is again jolted by the upper lip of the float stem 38 so as to disengage the notch 46 and lip 44. In this way the latch in the form of stay 45 which previously restrained the motion of the float arm 57, is released. The cistern 1 then immediately begins to fill since the float arm 57 allows the inlet valve 50 to permit water to enter the cistern 1.

At the conclusion of the flushing action, the float stem 38 and flush valve 3 fall thereby closing off the cistern 1 and allowing the water level within the cistern to rise. This moves the float arm 57 in the clockwise direction as seen in Fig. 9 and again re-engages the lip 44 and notch 46. This again latches the stay 45 and returns the mechanism to the position illustrated in Fig. 2.

In view of the foregoing it will be seen that even if the flush valve 3 should leak, the maximum amount of water wasted between successive flushes is only the volume of water contained within the cistern 1. Furthermore, on the first operation of the flush actuator button 10, no flush is produced. However, it is immediately apparent to the user that the cistern 1 is being refilled. A subsequent operation of a flush actuator button 10 produces the necessary flush, but the person using the cistern to flush the toilet is advised (by the changed operation from the normal immediate flush following depression of the flush actuator button 10) that the cistern is not operating in its usual manner and should therefore be serviced.

The foregoing describes only one embodiment of the present invention and modifications, obvious to those skilled in the art, can be made thereto within the scope of the appended claims.

## Claims

1. An interlock mechanism for a flush valve operated cistern (1) having a flush valve (3) in the base thereof which, when opened, drains water stored in said cistern to constitute a flush, said cistern further having an actuator mechanism (11) interconnecting a flush actuator (10) with said flush valve (3) to open the latter on operation of said actuator (10), and an inlet valve (50) having a refill actuator (56,57) operable in response to the level of water in said cistern to refill same to a predetermined level wherein said interlock mechanism comprising a latch means (43-47) interconnectable with said refill actuator (56,57) and said flush actuator (10) and operable to prevent re-filling of said cistern, said latch means being releasable by operation of said flush actuator and being re-settable by initial re-filling of said cistern after a flush and wherein said refill actuator includes a first float (56) linked to a float arm (57) which is coupled to said inlet valve (50) and which is adjacent said actuator mechanism (11), said latch means comprises a pivoted lever (45) being movable by operation of said actuator mechanism (11) to move an abutment (46) on said pivoted lever (45) out of engagement with a stop member (44) of the latch means (43-47), and biasing means comprising gravity acting on said pivoted lever (45) to return said abutment (46) into engagement with said stop member (44) following operation of said actuator mechanism (11), characterized in that said float arm (57) is pivotally connectable to said inlet valve, said pivoted lever (45) is to be pivotally connected to said float arm (57) and is to extend between said float arm (57) and said actuator mechanism (11) and said stop member (44) is to be stationarily fixed relative to the cistern (1), wherein said interlock mechanism further includes a latch securing mechanism comprising a second float (41) mounted for movement with a pivoted locking lever (42) the pivoted locking lever (42) being pivotable to bear against said pivoted lever (45) with decreasing water levels in said cistern to secure said abutment (46) and stop member (44) in mutual engagement if said water level drops prior to actuation of said actuator mechanism (11).

2. An interlock lever as claimed in claim 1 wherein said pivoted lever (45) depends from said float arm (57), and a rising water level in said cistern raises said lever (45) to align said abutment (44) and stop member (46).

3. A method of operating a flush valve operated cistern (1) comprising an interlock mechanism as specified in claim 1 or 2, the cistern having a flush valve (3) in the base thereof which, when opened, drains water in said cistern (1) to constitute a flush, said cistern (1) further having an actuator mechanism (11) interconnecting a flush actuator (10) with said flush valve (3) to open the latter on operation of said actuator (10), and an inlet valve (50) having a refill actuator (56,57) operable in response to the level of water in said cistern (1) to refill same to a predetermined level; said method comprising the steps of
(1) providing a latch mechanism (43-47) which is interconnected with said refill actuator (56,57) and said flush actuator (10) and which is operable to prevent refilling of said cistern (1),
(2) releasing the latch mechanism (43-47) following operation of the flush actuator (10),
(3) re-setting the latch mechanism (43-47) following initial refilling of said cistern (1) after a flush,
(4) sensing the level of water in said cistern (1), and
(5) securing said latch mechanism (43-47) to prevent refilling of said cistern (1) if the sensed level of water in the cistern (1) is low, wherein the sensing of the level of water in said cistern (1) is determined by the position of a pivoted locking lever (42) having a float (41).

## Patentansprüche

1. Verriegelungsmechanismus für einen Behälter mit Spülventilbetrieb (1) mit einem Spülventil (3) in seinem Boden, das bei Öffnung in dem Behälter gespeichertes Wasser für eine Spülung ausläßt, wobei der Behälter ferner aufweist einen Betätigungsmechanismus (11), der ein Spülbetätigungselement (10) mit dem Spülventil (3) verbindet, um letzteres bei Betätigung des Betätigungselements (10) zu öffnen, und ein Einlaßventil (50) mit einem Wiederbefüllbetätigungselement (56, 57), das ausgelegt ist dazu, ansprechend auf den Wasserpegel in dem Behälter, denselben auf einen vorbestimmten Pegel wieder aufzufüllen, wobei der Verriegelungsmechanismus aufweist eine Verriegelungseinrichtung (43-47), die mit dem Wiederauffüllbetätigungselement (56, 57) und dem Spülbetätigungselement (10) verbindbar und dazu ausgelegt ist, ein Wiederauffüllen des Behälters zu verhindern, und durch Betätigung des Spülbetätigungselements lösbar ist und durch anfängliches Wiederauffüllen des Behälters nach einer Spülung rücksetzbar ist, das Wiederauffüllbetätigungselement einen mit einem an das Einlaßventil (50) gekoppelten und dem Betätigungsmechanismus (11) benachbarten Schwimmerarm (57) verbundenen ersten Schwimmer (56) aufweist, die Verriegelungseinrichtung einen angelenkten Hebel (45), der durch Betätigung des Betätigungsmechanismus (11) bewegbar ist, um einen Anschlag (46) an dem angelenkten Hebel (45) außer Eingriff mit einem Anschlagelement (44) der Verriegelungseinrichtung (43-47) zu bewegen, und eine Vorspanneinrichtung aufweist, bei der auf eine Betätigung des Betätigungsmechanismus (11) folgend eine Schwerkraft auf den angelegten Hebel (45) wirkt, um den Anschlag (46) in Eingriff mit dem Anschlagelement (44) zu bringen, dadurch gekennzeichnet, daß der Schwimmerarm (57) schwenkbar mit dem Einlaßventil verbindbar ist, der angelenkte Hebel (45) dazu ausgelegt ist, schwenkbar mit dem Schwimmerarm (57) verbunden zu werden und sich zwischen dem Schwimmerarm (57) und dem Betätigungsmechanismus (11) zu erstrecken, und das Anschlagelement (44) in Bezug zu dem Behälter (1) stationär festzulegen ist, wobei der Verriegelungsmechanismus ferner aufweist einen Verriegelungssicherungsmechanismus mit einem zweiten Schwimmer (41), der zu einer Bewegung mit einem angelenkten Verriegelungshebel (42) ausgelegt montiert ist, wobei der angelenkte Verriegelungshebel (42) so schwenkbar ist, daß er bei abnehmenden Wasserpegeln in dem Behälter gegen den angelenkten Hebel (45) drückt, um den Anschlag (46) und das Anschlagelement (44) in gegenseitigem Eingriff zu sichern, wenn der Wasserpegel vor Betätigung des Betätigungsmechanismus (11) fällt.

2. Verriegelungshebel (richtig: Verriegelungsmechanismus) nach Anspruch 1, bei dem der angelenkte Hebel (45) von dem Schwimmerarm (57) herabhängt und ein ansteigender Wasserpegel in dem Behälter den Hebel (45) anhebt, um den Anschlag (44) und das Anschlagelement (46) auszurichten.

3. Verfahren zum Betreiben eines Behälters (1) mit Spülventilbetrieb mit einem Verriegelungsmechanismus nach Anspruch 1 oder 2, wobei der Behälter versehen ist mit mit einem Spülventil (3) in seinem Boden, das bei Öffnung Wasser in dem Behälter für eine Spülung ausläßt, wobei der Behälter (1) ferner aufweist einen Betätigungsmechanismus (11), der ein Spülbetätigungselement (10) mit dem Spülventil (3) verbindet, um letzteres bei Betätigung des Betätigungselements (10) zu öffnen, und ein Einlaßventil (50) mit einem Wiederbefüllbetätigungselement (56, 57), das ausgelegt ist dazu, ansprechend auf den Wasserpegel in dem Behälter (1), denselben auf einen vorbestimmten Pegel wieder aufzufüllen; wobei das Verfahren die Schritte aufweist:
(1) Vorsehen eines Verriegelungsmechanismus (43-47), der mit dem Wiederauffüllbetätigungselement (56, 57) und dem Spülbetätigungselement (10) verbunden ist und dazu ausgelegt ist, das Wiederauffüllen des Behälters (1) zu verhindern,
(2) Freigeben des Verriegelungsmechanismus (43-47) auf eine Betätigung des Spülbetätigungselements (10) folgend,
(3) Rücksetzen des Verriegelungsmechanismus (43-47) auf ein anfängliches Wiederauffüllen des Behälters (1) nach einer Spülung folgend,
(4) Erfassen des Wasserpegels in dem Behälter (1), und
(5) Sichern des Verriegelungsmechanismus (43-47) zum Verhindern des Wiederauffüllens des Behälters (1), wenn der erfaßte Wasserpegel in dem Behälter (1) niedrig ist, wobei die Erfassung des Wasserpegels in dem Behälter (1) bestimmt ist durch die Position eines angelenkten Verriegelungshebels (42) mit einem Schwimmer (41).

## Revendications

1. Mécanisme d'enclenchement pour un réservoir de chasse d'eau (1) actionné par une valve de chasse (1) comportant dans la base de ce réservoir une valve de chasse (3), laquelle quand elle est ouverte, fait écouler l'eau contenue dans ce réservoir pour constituer une chasse, ledit réservoir comportant en outre un mécanisme d'actionnement (11) reliant un actionneur de chasse (10) à ladite valve de chasse (3) de manière à ouvrir celle-ci lors du fonctionnement dudit actionneur (10), et une valve d'admission (50) ayant un actionneur de remplissage (56, 57) susceptible de fonctionner en réponse au niveau de l'eau dans ledit réservoir pour le remplissage de ce dernier jusqu'à un niveau déterminé, dans lequel ledit mécanisme d'enclenchement comprend des moyens de verrouillage (43 à 47) susceptibles d'être reliés audit actionneur de remplissage (56, 57) et audit actionneur de chasse (10) et de fonctionner pour empêcher le re-remplissage dudit réservoir, lesdits moyens de verrouillage étant libérables par le fonctionnement dudit actionneur de chasse et réarmables par un re-remplissage initial dudit réservoir après une chasse, et dans lequel ledit actionneur de remplissage comprend un premier flotteur (56) articulé à un bras de flotteur (57) qui est couplé à ladite valve d'admission (50) et qui est adjacent audit mécanisme d'actionnement (11), lesdits moyens de verrouillage comprenant un levier pivoté (45) pouvant être déplacé par l'actionnement dudit mécanisme d'actionnement (11) pour déplacer une butée (46) dudit levier pivoté hors de contact avec un organe de butée (44) des moyens de verrouillage (43 à 47), ainsi que des moyens de sollicitation comprenant une action par gravité sur ledit levier pivoté (45) pour rappeler ladite butée (46) au contact dudit organe de butée (44) après fonctionnement dudit mécanisme d'actionnement (11), caractérisé en ce que ledit bras de flotteur (57) est susceptible d'être relié à pivotement à ladite valve d'admission, en ce que ledit levier pivoté (45) est relié de manière à pivoter audit bras de flotteur (57) et s'étend entre ledit bras de flotteur (57) et ledit mécanisme d'actionnement (11), et en ce que ledit organe de butée (44) est monté de manière fixe sur le réservoir (1), ledit mécanisme d'enclenchement comprenant en outre un mécanisme de retenue de verrouillage comportant un second flotteur (41) monté de manière à se déplacer avec un bras de blocage (42) pivoté, ce dernier bras (42) étant susceptible de pivoter pour venir en contact dudit levier pivoté (45) lors de la baisse des niveaux de l'eau dans ledit réservoir pour maintenir ladite entrée (46) et ledit organe de butée (44) en contact l'un avec l'autre si le niveau de l'eau baisse avant l'actionnement dudit mécanisme d'actionnement (1).

2. Levier d'enclenchement selon la revendication 1, dans lequel ledit levier pivoté (45) est rattaché audit bras de flotteur (57), et une élévation du niveau de l'eau dans ledit réservoir provoque une montée dudit levier (45) pour aligner ladite butée (44) et l'organe de butée (46).

3. Procédé de fonctionnement d'un réservoir (1) fonctionnant avec une valve de chasse comportant un mécanisme de déclenchement tel que spécifié à la revendication 1 ou 2, ce réservoir comprenant à sa base une valve de chasse (3) qui, lorsqu'elle est ouverte, laisse s'écouler l'eau dudit réservoir (1) pour former une chasse, ledit réservoir (1) comportant en outre un mécanisme d'actionnement (11) reliant un actionneur de chasse (10) à ladite valve de chasse (3) pour ouvrir celle-ci lors du fonctionnement dudit actionneur (10) et une valve d'admission (50) comportant un actionneur de re-remplissage (56, 57) actionnable en réponse au niveau de l'eau dans ledit réservoir (1) pour le re-remplissage de ce dernier jusqu'à un niveau prédéterminé ; ledit procédé comprenant les étapes consistant :
(1) à prévoir un mécanisme de verrouillage (43 à 47) qui est relié audit actionneur de re-remplissage (56, 57) et audit actionneur de chasse (10) et qui est susceptible d'être actionné pour empêcher le re-remplissage dudit réservoir (1),
(2) à libérer le mécanisme de verrouillage (43 à 47) à la suite du fonctionnement de l'actionneur de chasse (10),
(3) à réarmer le mécanisme de verrouillage (43 à 47) à la suite du re-remplissage initial dudit réservoir (1) après une chasse,
(4) à détecter le niveau de l'eau dans ledit réservoir (1), et
(5) à fixer ledit mécanisme de verrouillage (43 à 47) pour empêcher le re-remplissage dudit réservoir (1) si le niveau détecté de l'eau dans le réservoir (1) est bas, la détection du niveau de l'eau dans ledit réservoir (1) étant déterminé par la position d'un levier de blocage pivoté (42) comportant un flotteur (41).
